# EUROPÄISCHE PATENTANMELDUNG

(11) **EP 0 849 866 A1**
(43) Veröffentlichungstag der Anmeldung: **24.06.1998**
(21) Anmeldenummer: 97121587.6
(22) Anmeldetag: 08.12.1997
(51) Int. Cl.: H02K 23/04

(54) **Kommutator-Stellmotor mit hochauflösender Dreherkennung**

(30) Priorität: 19.12.1996 DE 19653209
(71) Anmelder: SIEMENS AKTIENGESELLSCHAFT, 80333 München (DE)
(72) Erfinder: Bellmann, Jürgen, 97080 Würzburg (DE); Hartel, Gerd, Dipl-Ing., 97276 Margetshöchheim (DE)

(57) **Zusammenfassung**

Innerhalb des Motorgehäuses (1.1) ist auf dem kommutatorseitigen Ende der Rotorwelle (1.3) zwischen Kommutator (1.6) und Motorwellen-Lager (5) ein Polrad (3) mit gegenüber dem Kommutator (1.6) größerem Durchmesser als Drehimpuls-Geber angeordnet und diesem auf der axial vorgelagerten Bürstenhalterung (2) ein Drehimpuls-Empfänger (6) zugeordnet; das Polrad (3) ist bei der Montage auf das zunächst noch freie Wellenende der Rotorwelle (1.3) des bis auf das kommutatorseitige Lagerschild (4) mit darin verstemmtem Rotorwellen-Lager (5) vormontierten Stellmotors aufdrückbar.

## Beschreibung

Die Erfindung bezieht sich auf einen Kommutator-Stellmotor mit hochauflösender Dreherkennung gemäß Anspruch 1; derartige Stellmotore sind insbesondere zum Einsatz in elektrischen Kupplungs-Stellantrieben bzw. automatischen Brems-Stellantrieben in Kraftfahrzeugen vorgesehen.

Motoren der vorgenannten Art müssen in ihrer Baugröße, insbesondere axial, kompakt und bei feuchtigkeitsdicht geschlossener Bauart als Massen-Serienprodukt fertigungs- bzw. montagetechnisch einfach aufgebaut sein; um den Stellantrieb in Abhängigkeit von kleinsten Bewegungsänderungen ansteuern zu können, wird außerdem eine Dreherkennung mit hoher Auflösung gefordert, die bei nur geringem meßtechnischen Schaltungsaufwand vorteilhaft durch ein vielpolig magnetisiertes Polrad als Drehimpuls-Geber erreichbar ist, jedoch technologisch einen relativ großen Durchmesser des Polrades zur Aufbringung der Vielzahl von notwendigen Magnetpolen auf der Umfangsfläche voraussetzt. Üblicherweise werden bei derartigen Forderungen bzw. Voraussetzungen separate Dreherkennungssysteme verwendet, die durch jeweils einen gesonderten Tragkörper, einen Hall-IC-Drehimpulsempfänger mit gesonderten Anschlußleitungen und ein Polrad axial außerhalb der Lagerstellen des Stellmotors gekennzeichnet sind.

Gemäß Aufgabe der vorliegenden Erfindung soll ein demgegenüber mit fertigungs- bzw. montagetechnisch geringerem Aufwand herstellbarer, feuchtigkeitsdicht geschlossener Kommutator-Stellmotor mit hochauflösender Dreherkennung geschaffen werden.

Die Lösung der vorgenannten Aufgabe gelingt erfindungsgemäß durch einen Kommutator-Stellmotor gemäß Patentanspruch 1; vorteilhafte Ausgestaltungen der Erfindung sind jeweils Gegenstand der Unteransprüche.

Durch die Anordnung der Dreherkennung innerhalb der Lagerstellen des Elektromotors und innerhalb dessen Motorgehäuses mit gleichtzeitiger Integrierung des Drehimpuls-Empfängers auf der Bürstenhalterung lassen sich der für die Dreherkennung notwendige Fertigungs-Montageaufwand wesentlich mindern und die axiale Baugröße des Antriebes verringern; gleichzeitig ist durch die Einbeziehung der Dreherkennung in das Innere des Motorgehäuses ein zusätzlicher Schutz des Antriebes vor äußeren Beschädigungen bei Anlieferung und kundenseitiger Montage des Antriebes gewährleistet.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem axialen Längsschnitt einen Kommutator-Stellmotor für einen elektrischen Kupplungs-Stellantrieb in einem Kraftfahrzeug;
- FIG 2: die axiale kommutatorseitige Stirnansicht des mit der Bürstenhalterung versehenen Motorgehäuses bei abgenommenem kommutatorseitigen Lagerschild;
- FIG 3: die Anordnung gemäß FIG 1 in einer Vormontagestellung vor dem Aufdrücken des Polrades auf die Rotorwelle und vor der Montage des kommutatorseitigen Lagerschildes mit darin vormontiertem Rotorwellen-Lager an dem ansonsten bestückten Motorgehäuse;
- FIG 4: die axiale kommutatorseitige Stirnansicht des kommutatorseitigen Lagerschildes mit darin vormontiertem, durch Ausstemmungen aus dem Lagerschild axial spielfrei fixierten Rotorwellenlager;
- FIG 5: das Lagerschild gemäß FIG 4 im Schnittverlauf V-V.

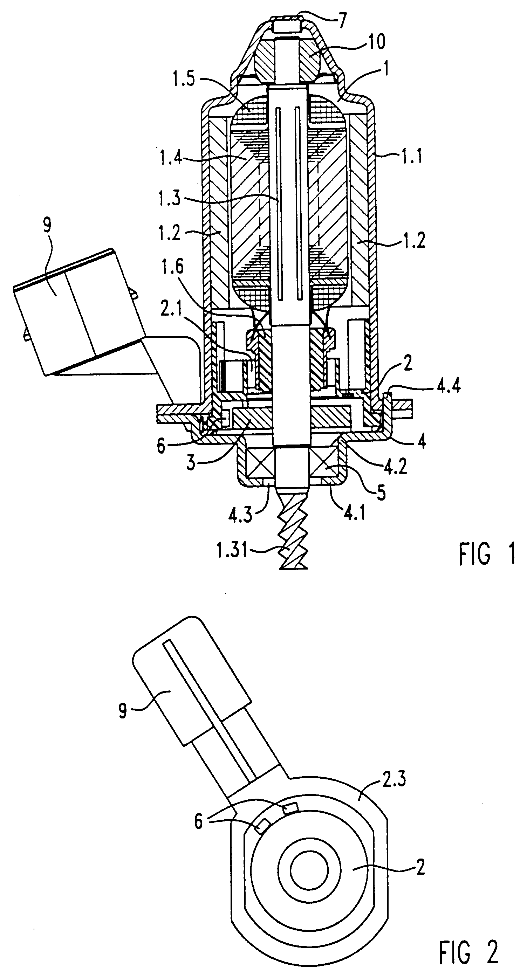

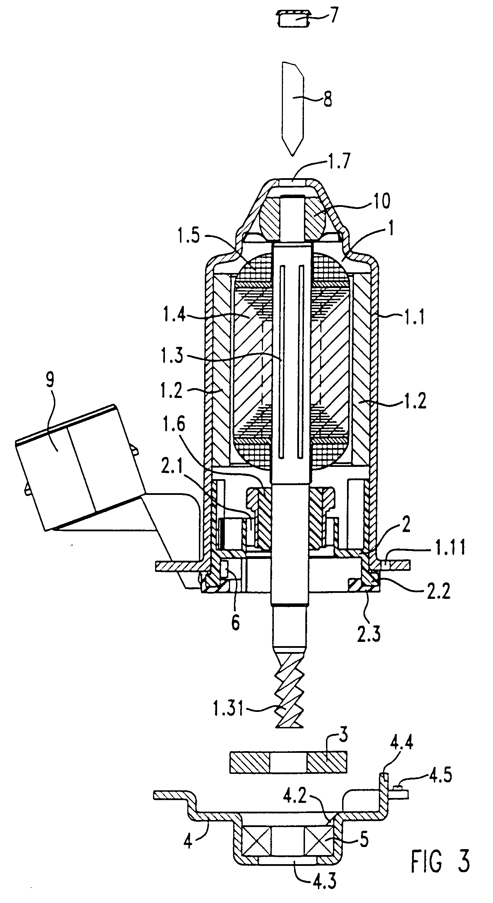

FIG 3 zeigt in einer Explosionsdarstellung anhand eines Kommutator-Stellmotors für einen elektrischen Kupplungs-Stellantrieb eine Vormontagestellung mit einer oberen ersten Bauteileinheit, einer unteren zweiten Bauteileinheit sowie einem Zwischenbauteil in Form des hochpolig magnetisierten Polrades; sämtliche Bauteileinheiten bzw. Bauteile sind zu einem Stellmotor gemäß FIG 1 zusammenzubauen.

Die erste obere Bauteileinheit enthält als wesentliche Einzelbauteile ein topfförmiges Motorgehäuse 1.1 mit darin statorseitig fest angeordneten Erregermagneten 1.2 und einer in das Motorgehäuse 1.1 eingesteckten, an ihrem oberen Ende in einem Kalottenlager 10 im Motorgehäuse 1.1 drehbar gelagerten Rotorwelle 1.3 mit darauf gehaltenem Rotorblechpaket 1.4, in das eine an einen Kommutator 1.6 angeschlossene Rotorwicklung 1.5 eingebracht ist, sowie mit einer axial vom offenen Ende des Motorgehäuses 1.1 her einschiebbaren Bürstenhalterung 2. Die Rotorwicklung 1.5 wird über den Kommutator 1.6 beschleifende, in der Bürstenhalterung 2 geführte Bürsten 2.1 von einer äußeren Speiseleitung gespeist. Ein dem Drehimpuls-Geber in Form des hochpolig magnetisierten Polrades 3 zugeordneter Drehimpuls-Empfänger 6 in Form einer Schaltungsanordnung mit hier zwei - insbesondere aus FIG 2 ersichtlichen - Hall-IC's ist in vorteilhafter Weise ohne gesonderte Einzelhalterung auf der Bürstenhalterung 2 in Nähe zu dem Polrad 3 mituntergebracht. Steuer und/bzw. Speiseleitungen führen zu einem, vorzugsweise einstückig mit der Bürstenhalterung 2 gespritzten, äußeren Anschluß-Steckverbindung 9.

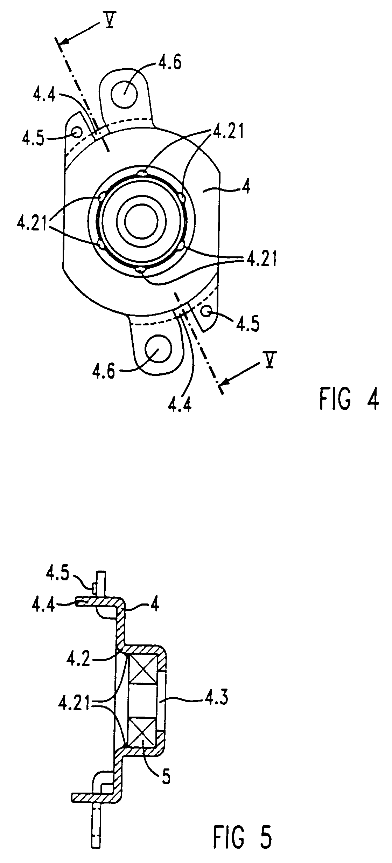

Für eine hochauflösende Dreherkennung ist als Drehimpuls-Geber ein hochpoliges Polrad 3 vorgesehen, dessen Durchmesser größer als der Durchmesser des Kommutators 1.6 ist und das vor der Montage des das topfförmige Motorgehäuse 1.1 kommutatorseitig abschließenden Lagerschildes 4 auf die ansonsten vormontierte obere Bauteileinheit gemäß FIG 5 befestigbar ist. Zum Aufdrücken des Polrades 3 auf das kommutatorseitige Wellenende der Rotorwelle 1.3 ist in fertigungs- und montagetechnisch vorteilhafter Weise das topfförmige Motorgehäuse 1.1 an seinem dem Kommutator 1.6 abgewandten Ende mit einer Öffnung 1.7 versehen, durch die ein Abstützwerkzeug 8 bis zur Anlage gegen das Wellenende der Rotorwelle 1.3 andrückbar ist und dessen Öffnung 1.7 nach dem Rückziehen des Abstützwerkzeuges 8 durch eine Dichtungskappe 7 wieder verschließbar ist.

In vorteilhafter Weise ist eine zweite vormontierbare Bauteileinheit aus dem kommutatorseitigen Lagerschild 4 und dem darin zu befestigenden Rotorwellen-Lager 5, insbesondere in Form eines Kugellagers, derart vorgesehen, daß das Rotorwellen-Lager 5 in seiner einen axialen Richtung am Topfboden 4.1 einer topfförmigen Vertiefung des Lagerschildes 4 axial anliegt und in seiner axialen Gegenrichtung im Sinne eines axial kurzbauenden Festlagers durch aus dem Topfrand 4.2 der topfförmigen Vertiefung ausdrückbare, über den Umfang des Außenrandes des Rotorwellen-Lagers 5 verteilte, vorteilhaft aus dem Vollmaterial des Lagerschildes 4 ausgeprägte, Verstemmungen 4.21 positionssicherbar ist; durch die Verstemmung des Rotorwellen-Lagers 5 ist einerseits eine fertigungstechnisch einfache und andererseits insbesondere auch hinsichtlich stärkerer axialer Druckbelastungen stabile Lagefixierung gewährleistet. Die derartig geschaffene Bauteileinheit wird dann an der oberen Bauteileinheit des Motorgehäuses 1.1 befestigt, wobei beim Aufdrücken des Rotorwellen-Lagers 5 auf die Rotorwelle 1.3 vorteilhaft in axialer Gegenrichtung auch hier das Abstützwerkzeug 8 einsetzbar ist. Der gesamte Bestückungs- bzw. Montagevorgang kann vorteilhaft in nur einer, insbesondere für eine Automatenfertigung geeigneten, hier axialen, Handhabungsrichtung erfolgen.

Damit trotz einfacher Fertigung und Montage eine möglichst genaue Ausrichtung mit minimalem Luftspalt zwischen dem hochpolig magnetisierten Polrad 3 auf der Rotorwelle 1.3 einerseits und dem Hall-IC-Empfänger 6 auf der Bürstenhalterung 2 andererseits gewährleistet ist, sind an das Motorgehäuse 1.1 sowie an den kommutatorseitigen Lagerschild 4 im Bereich ihrer gegenseitigen Montage-Anlage, insbesondere an einem radial überstehenden Flanschteil, Ausrichtmittel vorgesehen, z.B. in Form von an den Lagerschild 4 angeformten axialen Führungs-Stiften 4.5, denen am Motorgehäuse 1.1 angepaßte axiale Führungs-Öffnungen entsprechen, bzw. Befestigungsmittel 4.4 vorgesehen, z.B. in Form von an dem Lagerschild 4 angeformten axialen Bordelungs-/Verstemmnasen, die durch korrespondierende Befestigungsöffnungen als Befestigungsmittel 1.11 am Motorgehäuse 1.1 steckbar und dann im Sinne einer gegenseitigen Fixierung verformbar, insbesondere verstemmbar, sind.

Zur gegenseitigen Abdichtung zwischen Motorgehäuse 1.1 und kommutatorseitigem Lagerschild 4 reicht nach einer Ausgestaltung der Erfindung die Bürstenhalterung 2 mit einem umfangsseitigen Randteil 2.2, auf den eine Dichtung 2.3 aufgetragen, insbesondere aufgespritzt, ist, zwischen die stirnseitigen gegenseitigen Anlageflächen von Motorgehäuse 1.1 und Lagerschild 4.

Ein durch eine Mittelöffnung 4.3 des Lagerschildes 4 herausführbares und gegenüber dem umgebenden Lagerschild 4 und/oder in der Durchführung durch die Bürstenhalterung 2 gegenüber dieser abdichtbares Abtriebswellenende 1.31 der Rotorwelle 1.3 ist mit einen Abtriebsstirnrad, insbesondere mit einer axial belastenden Verzahnung, zum Antrieb einer elektrischen Kupplungsstelleinrichtung in einem Kraftfahrzeug versehen. Bei vorteilhafter Anwendung des erfindungsgemäßen Kommutator-Stellmotors für einen ABS-Antrieb ist das herausragende Wellenende der Rotorwelle 1.3 zweckmäßigerweise mit einem Exzenter zum Antrieb von Pumpenstößeln einer Brems-Hydraulikpumpe versehen.

## Patentansprüche

1. Kommutator-Stellmotor mit hochauflösender Dreherkennung, insbesondere Stellmotor in feuchtigkeitsdicht geschlossener Bauform,
- mit einer von einem Motorgehäuse (1.1) aufgenommenen Bürstenhalterung (2) und einem, von den Bürsten (2.1) der Bürstenhalterung (2) kontaktierten Kommutator (1.6);
- mit einem Rotorwellen-Lager (5), insbesondere Kugellager, in einem mit dem Motorgehäuses (1.1) verbundenen kommutatorseitigen Lagerschild (4);
- mit einer Dreherkennung enthaltend einen magnetischen Drehimpuls-Geber in Form eines axial zwischen dem Kommutator (1.6) und dem Rotorwellen-Lager (5) auf der Rotorwelle (1.3) angeordneten Polrades (3) mit hoher Polzahl und mit einem im Vergleich zu dem Kommutator (1.6) größeren Durchmesser einerseits sowie enthaltend einen zugeordneten magnetischen Drehimpuls-Empfänger (6), insbesondere Hall-IC-Empfänger, auf der Bürstenhalterung (2) andererseits.

2. Kommutator-Stellmotor nach Anspruch 1
- mit einem Polrad (3) mit etwa 30 über den Umfang verteilten Einzel-Magnetpolen.

3. Kommutator-Stellmotor nach Anspruch 2
- mit einem Kommutator (1.6) mit einem Durchmesser von ca. 17 mm;
- mit einem Polrad (3) mit einem Durchmesser von ca. 28 mm.

4. Kommutator-Stellmotor nach zumindest einem der vorhergehenden Ansprüche
- mit einem, insbesondere topfförmigen, Motorgehäuse (1.1) mit an seinem kommutatorseitigen, stirnseitig offenen Ende angeordneter Bürstenhalterung (2) mit Dehimpuls-Empfänger (6);
- mit an seinem kommutatorseitigen Ende stirnseitig mit einem das Rotorwellen-Lager (5) aufnehmenden Lagerschild (4).

5. Kommutator-Stellmotor nach Anspruch 4
- mit einer ersten vormontierten Bauteileinheit enthaltend das bestückte Motorgehäuse (1.1;1,2;2;3;6;10) mit eingestecktem Rotor (1.3-1.6) mit auf dem noch freien kommutatorseitigen Ende der Rotorwelle (1.3) aufgedrücktem Polrad (3);
- mit einer, mit der ersten Bauteileinheit zusammenbaubaren, zweiten Bauteileinheit enthaltend das kommutatorseitige Lagerschild (4) mit darin befestigtem Rotorwellen-Lager (5), insbesondere Rotorwellen-Kugellager.

6. Kommutator-Stellmotor nach Anspruch 5
- mit axial außen gegen einen Anschlag des Lagerschildes (4), insbesondere einen Topf-Boden (4.1) einer topfförmigen Vertiefung, anliegenden Rotorwellen-Lager (5);
- mit axial innen durch Verstemmen mit dem Lagerschild (4), insbesondere dem Topf-Rand (4.2) der topfförmigen Vertiefung, im Sinne eines Festlagers positionsfixierten Rotorwellen-Lager (5), insbesondere Kugellager.

7. Kommutator-Stellmotor nach zumindest einem der vorhergehenden Ansprüche 5 bzw.6
- mit einer stirnseitigen, insbesondere durch eine Verschlußkappe (7) verschließbaren, Öffnung (1.7) im Motorgehäuse (1.1) bzw. Lagerschild am kommutatorabgewandten Ende der Rotorwelle (1.3) und mit einem durch die Öffnung (1.7) zuführbaren, axial gegen die Rotorwelle (1.3) andrückbaren Abstützwerkzeug (8) beim Aufdrücken des Polrades (3) bzw. eines kommutatorseitigen Festlagers (5) auf das kommutatorseitige, freie Ende der Rotorwelle (1.3) der ersten Bauteileinheit.

8. Kommutator-Stellmotor nach zumindest einem der vorhergehenden Ansprüche
- mit an das Motorgehäuse (1.1) sowie an den kommutatorseitigen Lagerschild (5) im Bereich ihrer gegenseitigen Montage-Anlage, insbesondere an einen radial überstehenden Flanschteil, einstückig angeformten Ausrichtmitteln (4.5) bzw. Befestigungsmitteln (4.4;1.11).

9. Kommutator-Stellmotor nach zumindest einem der vorhergehenden Ansprüche
- mit einer Bürstenhalterung (2) mit einem umfangsseitig zwischen die voreinanderliegenden Stirnseiten von Motorgehäuse (1.1) einerseits und Lagerschild (4) andererseits reichenden Randteil (2.2), mit einer, insbesondere aufgespritzten, Dichtungsauflage (2.3).

10. Kommutator-Stellmotor nach zumindest einem der vorhergehenden Ansprüche
- mit einem durch eine Mittelöffnung (4.3) des kommutatorseitigen Lagerschildes (4) ragenden Abtriebswellenende (1.31) der Rotorwelle (1.3).

11. Kommutator-Stellmotor nach zumindest einem der vorhergehenden Ansprüche 1-10
- mit einer Verwendung als Antrieb für einen elektrischen Kupplungs-Stellantrieb (EKS) in einem Fahrzeug, insbesondere Kraftfahrzeug.

12. Kommutator-Stellmotor nach zumindest einem der vorhergehenden Ansprüche 1-10
- mit einer Verwendung als Antrieb für einen elektrischen automatischen Brems-Stellantrieb (ABS) in einem Fahrzeug, insbesondere einem Kraftfahrzeug.
